# EUROPÄISCHE PATENTSCHRIFT

(11) **EP 2 693 362 B1**
(45) Veröffentlichungstag und Bekanntmachung des Hinweises auf die Patenterteilung: **17.06.2015**
(21) Anmeldenummer: 12178680.0
(22) Anmeldetag: 31.07.2012
(51) Int. Cl.: G06K 7/10

(54) **Erfassungssystem zur Montage an einem Förderband**
Detection system for mounting on a conveyor belt
Système de détection destiné à être monté sur une bande de transport

(43) Veröffentlichungstag der Anmeldung: 05.02.2014
(73) Patentinhaber: SICK AG, 79183 Waldkirch (DE)
(72) Erfinder: Gehring, Roland, 79215 Elzach (DE); Reichenbach, Jürgen, 79312 Emmendingen (DE)
(74) Vertreter: Ludewigt, Christoph

(56) Entgegenhaltungen:
- EP-A1- 2 048 596
- EP-A1- 2 048 596
- EP-B1- 1 363 228

## Beschreibung

Die Erfindung betrifft ein Erfassungssystem zur Montage an einem Förderband und ein Verfahren zur Erfassung von Objekteigenschaften nach dem Oberbegriff von Anspruch 1 beziehungsweise 15.

Zur Automatisierung von Vorgängen an einem Förderband werden Sensoren eingesetzt, um Objekteigenschaften der geförderten Objekte zu erfassen und in Abhängigkeit davon weitere Bearbeitungsschritte einzuleiten. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird.

Das Anbringen eines Barcodes oder eines zweidimensionalen Codes kann als eine derartige Objekteigenschaft aufgefasst werden, die dem Objekt eigens aufgeprägt wird, um den Objekten individuelle Unterscheidungsmerkmale zu geben und dadurch derartige Aufgaben zu erleichtern. Bei solchen Code tragenden Objekten können deshalb Objekteigenschaften sowohl durch allgemeine Sensoren etwa durch die Bestimmung von geometrischen Objekteigenschaften als auch durch Codeleser erfasst werden, welche die Codes auslesen.

Die verbreitetsten Codeleser sind Barcodescanner, welche einen Barcode oder Strichcode mit einem Laserlesestrahl quer zum Code abtasten. Sie werden an Supermarktkassen, zur automatischen Paketidentifikation, Sortierung von Postsendungen oder bei der Gepäckabfertigung in Flughäfen und in anderen Logistikanwendungen häufig eingesetzt. Mit der Weiterentwicklung der digitalen Kameratechnologie werden Barcodescanner zunehmend durch kamerabasierte Codeleser abgelöst. Statt Codebereiche abzuscannen, nimmt ein kamerabasierter Codeleser mit Hilfe eines CCD-Chips Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. In einer wichtigen Anwendungsgruppe werden die Code tragenden Objekte an dem Codeleser vorbei gefördert. Eine Kamera, häufig eine Kamerazeile, liest die Objektbilder mit den Codeinformationen sukzessive mit der Relativbewegung ein.

Eine Art von Codeleser, der auf einer gänzlich anderen Technologie basiert, ist ein RFID-Leser (Radio Frequency Identification). Dabei ist an dem zu identifizierenden Objekt anstelle eines optischen Codes ein Transponder angebracht. Der Zweck bleibt derselbe, nämlich eine Wiedererkennung von Objekten für eine individualisierte Behandlung zu ermöglichen.

Der Erfassungsbereich eines einzelnen Sensors reicht oft nicht aus, um sämtliche relevanten Informationen über die Objekte auf einem Förderband aufzunehmen. Gerade beim Codelesen sind regelmäßig mehrere Sensoren vorgesehen, um Objekte von mehreren oder allen Seiten aufzunehmen, damit die Codes auf beliebigen Seiten der Objekte aufgebracht sein können. Die einzelnen Sensoren werden zu einem Erfassungssystem zusammengefasst, in dem meist eine gemeinsame Steuerung die verschiedenen Sensordaten aufbereitet, ehe sie an eine übergeordnete Steuerung der Anlage übergeben werden, zu welcher das Förderband gehört.

Es ist weiterhin bekannt, Codelesern einen zusätzlichen Geometriesensor vorzuordnen, etwa einen entfernungsmessenden Laserscanner. Man erhält auf diese Weise vorab Informationen, welche Objekte sich auf dem Förderband befinden und welche Geometrie diese Objekte aufweisen. Andererseits wird die Position eines Codes während des Lesens bestimmt. Damit ist es eindeutig möglich, den Code und damit dessen Codeinformationen einem Objekt zuzuordnen.

Die Position eines Codes lässt sich in einem Barcodescanner durch eine integrierte Abstandsbestimmung messen. Es stehen dann nämlich über den Scanwinkel, den Winkel der Scanebene und den Abstand dreidimensionale Polarkoordinaten der Codeposition zur Verfügung. Alternativ wird kein Abstand gemessen, sondern der Schnittpunkt des Lesestrahls mit der bekannten Objektgeometrie ermittelt. Ein kamerabasierter Codeleser erkennt die Codeposition durch Bildverarbeitung und eventuelle Korrekturen durch Verrechnung mit der Objektgeometrie. Für RFID-Leser sind Lokalisierungen anhand der Signalstärke des RFID-Signals oder anhand von Phasenmessungen bekannt, wobei allerdings derzeit im Stand der Technik noch nicht alle Schwierigkeiten beherrscht werden, um stets eine zuverlässige und eindeutige Transponderposition zu erhalten.

Objekteigenschaften und Codeinformationen werden bei Verwendung eines zusätzlichen Geometriesensors in unterschiedlichen Förderpositionen ermittelt, und die Ausgabe der verarbeiteten Objekteigenschaften für die Steuerung des weiteren Objektflusses, wie Codeinformationen, Gewicht oder Geometrie des Objekts, erfolgt an einem nochmals in Förderrichtung versetzten Ausgabepunkt. Um während der Förderbewegung die Zuordnung zu einem Objekt zu erhalten, wird das Objekt auf Basis der gemessenen oder bekannten Fördergeschwindigkeit oder eines Wegsignals eines an dem Förderband angebrachten Encoders verfolgt.

Diese Objektverfolgung (Tracking) mündet allerdings herkömmlich in nur einem einzigen Ausgabepunkt. Die übergeordnete Steuerung erhält also die Objektinformationen immer, wenn sich ein Objekt an ein und derselben Position des Förderbandes befindet. Damit ist es nicht möglich, in dieser Hinsicht zwischen den Objekten zu differenzieren.

In besonderem Maße stellt sich dieses Problem, wenn mehrere Förderbänder direkt nebeneinander angeordnet sind. Dies ist für die Erhöhung des Objektdurchsatzes von Vorteil. Ein ähnlicher Effekt wird erreicht, indem das Förderband mit beispielsweise doppelter Breite ausgeführt und mehrere Objekte nebeneinander gefördert werden. Das entspricht praktisch mehreren Förderlinien mit untereinander gleicher Geschwindigkeit.

Ein herkömmliches Erfassungssystem kann mit dieser Situation nicht umgehen, weil der einzige Ausgabepunkt nur auf die Bedürfnisse eines Förderbandes zugeschnitten werden kann und deshalb für die weiteren Förderbänder allenfalls zufällig oder durch Anpassungen der gesamten Anlage geeignet ist. Die übergeordnete Steuerung hat auch gar keine Kenntnis, auf welchem der mehreren Förderbänder sich das aktuell den Ausgabepunkt passierende Objekt befindet. Deshalb ist nach heutigem Stand der Technik erforderlich, auf jedem der Förderbänder getrennt arbeitende Erfassungssysteme zu montieren. Informationen aus Überlappungen eines Erfassungsbereichs mit einem benachbarten Förderband bleiben nicht nur ungenutzt, sie müssen sogar durch entsprechende mechanische Anordnung oder Software-Algorithmen ausgeblendet werden. Dadurch ist der Kostenaufwand erheblich erhöht.

Die EP 1 363 228 B1 beschreibt einen Codeleser mit integrierter Abstandsbestimmung, der für die Bestimmung von Codepositionen zur Zuordnung von Codes zu Objekten ausgebildet ist. Die Codeleser sind Barcodescanner und lesen deshalb paarweise in einer Kreuzanordnung, damit stets die Leselinie zumindest eines der Codeleser den gesamten Barcode einmal in Querrichtung überstreicht. Entgegen der Förderrichtung oberhalb der Barcodescanner ist in einer Ausführungsform ein zusätzlicher Sensor angebracht, welcher die Geometrie der einlaufenden Objekte vermisst, und zwar auch dann, wenn mehrere Objekte nebeneinander auf dem Förderband liegen. Es erfolgt anschließend aber keinerlei besondere Behandlung von nebeneinander liegenden Objekten gegenüber hintereinander liegenden Objekten. Die gelesenen Codes werden beim Verlassen des Lesebereichs den Objekten zugeordnet. Es wird keine Information bestimmt oder gar ausgegeben, welche Objekte in welcher Anordnung nebeneinander liegen. Es ist auch nicht beschrieben, dass Informationen hinter dem Lesebereich an eine übergeordnete Steuerung ausgegeben werden, so dass sich keinerlei Hinweis findet, von der üblichen Weitergabe von Informationen an einem einzigen Ausgabepunkt abzuweichen. Das Förderband wird nur als eine einzige Förderlinie behandelt, und zwar auch für nebeneinander liegende Objekte.

Es ist daher Aufgabe der Erfindung, ein Erfassungssystem zu schaffen, welches Objekte auf einem Förderband flexibler verarbeiten kann.

Diese Aufgabe wird durch ein Erfassungssystem zur Montage an einem Förderband und ein Verfahren zur Erfassung von Objekteigenschaften nach Anspruch 1 beziehungsweise 15 gelöst. Dabei geht die Erfindung von dem Grundgedanken aus, den gesamten Objektstrom auf dem Förderband als Zusammensetzung von mehreren Teilströmen jeweils einer Objektklasse aufzufassen, die sich durch bestimmte Objekteigenschaften definieren. Die Objektklassen können dann auf unterschiedliche Weise behandelt werden. An dem Förderband ist für jede Objektklasse ein Ausgabepunkt festlegbar oder konfigurierbar. Bevorzugt werden demnach die Objektinformationen gerade zu dem Zeitpunkt beispielsweise an eine übergeordnete Steuerung ausgegeben, in dem das betreffende Objekt den Ausgabepunkt erreicht. Alternativ werden die Objektinformationen asynchron übertragen und enthalten eine Zeitinformation, wann sich das Objekt am Ausgabepunkt befindet. Damit wird dann aber das abgestimmte Zeitverhalten in dem Erfassungssystem erschwert, und unerwartete Schwankungen der Förderbewegung können dazu führen, dass die Zeitinformation nicht mehr stimmt.

Vorzugsweise werden die Ausgabepunkte für jede Objektklasse unterschiedlich gesetzt, um unterschiedliche Bearbeitungsschritte an den Objekten vorzunehmen. In manchen Anwendungen ist aber auch vorstellbar, die Ausgabepunkte mehrerer oder aller Objektklassen zusammenfallen zu lassen. Aufgrund der übertragenen Objektinformationen kennt die übergeordnete Steuerung auch dann noch die zugehörige Objektklasse.

Die Objektinformationen können jede Art von erfassten Objekteigenschaften oder daraus abgeleitete Informationen umfassen, oder im Minimalfall lediglich in einem binären Signal bestehen, welches durch seine Übergabe am Ausgabepunkt implizit mitteilt, dass aktuell ein Objekt einer bestimmten Objektklasse den Ausgabepunkt passiert. Die übergeordnete Steuerung entscheidet, ob eine Handlung eingeleitet wird, etwa das Ausschleusen des betreffenden Objekts, und inwieweit die Objektinformationen diese Entscheidung beeinflussen.

Die Erfindung hat den Vorteil, dass das Erfassungssystem zusätzliche Verarbeitungsmöglichkeiten bietet. Objekte müssen nicht mehr einheitlich am gleichen Ausgabepunkt weiterverarbeitet werden. Dadurch erweitert sich das Anwendungsspektrum beziehungsweise es können Anwendungen mit weniger Sensorik gelöst werden.

Mindestens ein Erfassungssensor ist bevorzugt als Codeleser ausgebildet, insbesondere als kamerabasierter Codeleser, Barcodescanner oder RFID-Leser. Die gelesenen Codeinformationen können Teil der Objekteigenschaften sein, die in die Einteilung in eine Objektklasse einfließen, und auch Teil der ausgegebenen Objektinformationen. Ein kamerabasierter Codeleser weist einen zeilen- oder matrixförmigen Bildsensor auf, mit dem ein Bild während der Relativbewegung des Objekts auf dem Förderband zusammengesetzt oder in einer Art Schnappschuss aufgenommen wird.

Die Position eines gelesenen Codes ist bevorzugt in dem Codeleser bestimmbar, wobei die Auswertungseinheit dafür ausgebildet ist, den Code anhand seiner Position einem Objekt zuzuordnen. Durch die Zuordnung wird die Codeinformation zu einer Objekteigenschaft. Die ermittelte Codeposition wird nach der Erfassung auf dem Förderband gemäß dessen Vorschub weiterverfolgt ("getrackt"). In einem kamerabasierten Codeleser erfolgt die Positionsbestimmung vorzugsweise durch Bildverarbeitung. Ein Barcodescanner nutzt wie einleitend beschrieben eine integrierte Abstandsbestimmung oder bestimmt den Auftreffpunkt des Lesestrahls anhand von bekannten Geometrieeigenschaften des codetragenden Objekts. Für RFID-Leser sind Lokalisierungsverfahren für den Transponder anhand von Signalstärken oder Phasen der RFID-Signale bekannt, die fortlaufend verbessert werden.

Mindestens ein Erfassungssensor ist bevorzugt als Geometrieerfassungssensor ausgebildet. Damit werden Objekte auf dem Förderband samt ihren Abmessungen erkannt. Wenn das Erfassungssystem sowohl Codeleser als auch Geometrieerfassungssensoren umfasst, gibt es verschiedene Konfigurationen. Der Geometrieerfassungssensor kann separat ausgebildet sein und ist dem Codeleser dann vorzugsweise vorgeordnet, so dass die Geometriedaten vom Codeleser bereits nutzbar sind, etwa für eine Fokussierung. Es ist aber auch möglich, Geometrieerfassung und Codelesen in einem Sensor zusammenzufassen. Dazu kann bei Barcodescannern eine integrierte Abstandsmessung durch Lichtlaufzeitmessung dienen. Kamerabasierte Codeleser können als 3D-Kameras ausgebildet sein und Geometrien über ein Stereoskopieverfahren, ein Lichtlaufzeitverfahren oder ein Lichtschnittverfahren etwa anhand von Verformungen einer Beleuchtungslinie durch die Objektkonturen messen.

Vorzugsweise weist das Erfassungssystem mindestens einen Geschwindigkeitssensor zur Bestimmung der Fördergeschwindigkeit des Förderbandes oder mindestens einen Wegsensor zur Bestimmung des Vorschubs des Förderbandes auf. Der Ausgabepunkt liegt an einer festlegbaren Position auf dem Förderband hinter dem Ort der Erfassung. Über den von einem Geschwindigkeits- oder Wegsensor gemessenen Vorschub kann erkannt werden, zu welchem Zeitpunkt ein Objekt bis zu dem Ausgabepunkt gefördert wurde. Alternativ zu einer Messung des Vorschubs kann ein Bewegungsprofil des Förderbandes vorgegeben oder von einer übergeordneten Steuerung mitgeteilt werden. Sofern das Förderband wie weiter unten beschrieben mehrere Förderlinien mit unterschiedlicher Fördergeschwindigkeit umfasst, ist auch das Anbringen mehrerer Geschwindigkeits- oder Wegsensoren denkbar.

Die Objekteigenschaften umfassen bevorzugt mindestens eine der folgenden Eigenschaften: eine Breite, eine Höhe, eine Länge, ein Volumen, einen Flächeninhalt einer Auflagefläche des Objekts oder eines das Objekt umhüllenden Körpers, eine Remissionseigenschaft oder ein Gewicht. Damit sind die am häufigsten benötigten Objektgeometrieeigenschaften umfasst. Die Auflagefläche bezieht sich nicht notwendig auf die Fläche mit tatsächlichem Kontakt zwischen Förderband und Objekt. Eine senkrechte Projektion der Objektkontur auf das Förderband beschreibt in manchen Situationen den beanspruchten Platz noch besser. Remissionseigenschaften können abstrakt als Quantifizierung einer starken oder schwachen Remission oder konkreter als Grauwerte oder Farben erfasst werden. Mit Gewicht und Volumen sind zwei besonders wichtige Eigenschaften für die Abrechnung und Transportplanung in der Logistik erfasst.

Das Erfassungssystem weist bevorzugt mehrere Erfassungssensoren auf, deren Erfassungsbereiche sich in Breitenrichtung des Förderbandes ergänzen. Damit werden auch Förderbänder mit großer Breite abgedeckt, die das maximale Gesichtsfeld eines einzelnen Erfassungssensors überschreiten. Diese Kombination mehrerer Erfassungssensoren ist sowohl für Geometrieerfassungssensoren wie für Codeleser möglich. Die Auswertungseinheit ist bevorzugt dafür ausgebildet, die Objekteigenschaften der Erfassungssensoren zu fusionieren. Dabei werden beispielsweise Bilddaten zusammengesetzt (stitching) oder die erfassten Objekteigenschaften und Codeinformationen so zusammengefasst, als wären sie von einem einzelnen Erfassungssensor bestimmt, welcher die volle Breite des Förderbandes erfasst.

Die Auswertungseinheit ist bevorzugt dafür ausgebildet, von mehreren Erfassungssensoren erfasste Objekteigenschaften in ein gemeinsames Koordinatensystem umzurechnen. Dies ist ein wichtiges Beispiel für Datenfusion von mehreren Erfassungssensoren. Voraussetzung für eine Umrechnung in ein gemeinsames Koordinatensystem ist die Kenntnis der gegenseitigen Position und Ausrichtung der Erfassungssensoren, die in einer als Registrierung bezeichneten Kalibrierung bestimmt werden kann.

Die Auswertungseinheit ist bevorzugt dafür ausgebildet, Objekte anhand ihrer Position auf dem Förderband in Querrichtung in mindestens zwei Objektklassen zu unterteilen, insbesondere anhand mindestens einer Trennlinie längs des Förderbandes. Das Förderband wird somit in mehrere Förderlinien unterteilt (Multi Line). Die Trennlinie zwischen den Förderlinien muss nicht unbedingt in Längsrichtung gerade durchgezogen sein, sondern kann beispielsweise eine Ausbuchtung aufweisen, um ein größeres Objekt einer Förderlinie zuzuordnen. Innerhalb einer Förderlinie sind zusätzliche Unterteilungen in weitere Objektklassen anhand anderer Objekteigenschaften möglich. Man kann auch in Ausführungsformen, bei denen die Objektposition in Querrichtung beziehungsweise die laterale Objektposition keine Objektklassen bildende Eigenschaft ist, die verschiedenen Objektklassen als verschiedene Förderlinien auffassen, die sich dann sozusagen räumlich überlagern und durch andere Objekteigenschaften differenzieren. Aufgrund der Unterscheidung anhand der Position auf dem Förderband in Querrichtung genügt ein einziges Erfassungssystem, so dass sich die Kosten reduzieren. Der Aufbau des Erfassungssystems ist unabhängig von der Anzahl von Förderlinien, solange die Erfassungssensoren gemeinsam die Förderbandbreite abdecken können. Dabei ist eine direkte Zuordnung von jeweils einem Erfassungssensor zu einer Förderlinie möglich, aber keineswegs zwingend erforderlich.

Die Objekte werden in den verschiedenen Spuren oder Förderlinien verfolgt oder getrackt und an dem jeweils zu einer Objektklasse gehörigen Ausgabepunkt ausgegeben. Somit können beispielsweise Objekte jeder Förderlinie an einer anderen Position ausgeschleust werden. Die Ausgabepunkte von zwei Förderlinien können auch auf gleicher Höhe liegen. Denn die übergeordnete Steuerung hat dennoch am Ausgabepunkt aufgrund der Zugehörigkeit zu einer Objektklasse Kenntnis darüber, auf welcher Förderlinie sich ein aktuell passierendes Objekt befindet, und kann den Bearbeitungsschritt darauf ausrichten, beispielsweise indem Objekte auf einer rechten Förderlinie nach rechts und auf einer linken Förderlinie nach links ausgeschleust werden.

Die Auswertungseinheit ist bevorzugt dafür ausgebildet, eine Trennlinie dynamisch zu verschieben. Diese Verschiebung kann über die gesamte Länge der Trennlinie erfolgen, um das Förderband neu aufzuteilen. Denkbar ist aber auch eine Verschiebung nur in einem Teilbereich, beispielsweise um eine Ausbuchtung für ein größeres Objekt zu schaffen oder auszulösen. Die Verschiebung der Trennlinie ist automatisch und manuell möglich.

Die Trennlinie ist bevorzugt eine tatsächliche Trennlinie zwischen mehreren Förderlinien des Förderbands. In dieser Ausführungsform sollen mehrere benachbarte, aber physisch getrennte Förderbänder vom gleichen Erfassungssystem erfasst werden. Dabei sind unter Umständen auch unterschiedliche Geschwindigkeiten der einzelnen Förderbänder zu verarbeiten. Alternativ kann die Trennlinie auch eine virtuelle Trennlinie sein, die ein einziges Förderband aufteilt. Dabei kann es sich auch um eines der mehreren benachbarten Förderbänder handeln, wobei dann sowohl tatsächliche als auch virtuelle Trennlinien gezogen sind.

Die Ausbildungseinheit ist bevorzugt dafür ausgebildet, die Anzahl der berücksichtigten Trennlinien zu verändern. Dabei werden Trennlinien hinzugefügt oder entfernt, etwa weil eine neue Charge von Objekten zu bearbeiten ist. Beispielsweise können in einer Charge kleine Objekte zu dritt oder viert nebeneinander liegen, während in einer anschließenden Charge nur große Objekte vorhanden sind, welche die gesamte Breite beanspruchen und deshalb eine Trennlinie überflüssig machen. Virtuelle Trennlinien können frei gelöscht oder hinzugefügt werden. Tatsächliche Trennlinien zwischen voneinander separierten, benachbarten Förderbändern bleiben natürlich erhalten, aber das Erfassungssystem kann entscheiden, ob es diese physische Trennung als Trennlinie berücksichtigt beziehungsweise behandelt oder nicht.

Die Auswertungseinheit ist bevorzugt dafür ausgebildet, die Zuordnung anhand der Position in Querrichtung durch den Schwerpunkt des Objekts oder den größten Anteil der Auflagefläche des Objekts zu bestimmen. Im einfachsten Fall befindet sich die gesamte Objektkontur innerhalb ein und derselben Förderlinie. Ist dies aber nicht erfüllt, so muss ein Kriterium gefunden werden, zu welcher Förderlinie das Objekt gehören soll. Die Auflagefläche kann wie schon weiter oben auch durch eine senkrechte Projektion der dreidimensionalen Objektkontur auf das Förderband definiert sein. Der Schwerpunkt und die Auflagefläche können sowohl auf die Objektkontur als auch auf einen Hüllkörper, etwa ein umhüllendes Rechteck oder Quader (Bounding Box) bezogen sein. Schließlich kann die Zuordnung auch manuell erfolgen, sei es von vorne herein oder nur in Einzelfällen zu Kontrolle oder Nachbearbeitung in kritischen Fällen.

Die Auswertungseinheit ist bevorzugt dafür ausgebildet, während des Betriebs zu einem Umschaltzeitpunkt die Kriterien für die Unterteilung von Objekten in Objektklassen zu verändern, wobei an einem Ausgabepunkt so lange Objektinformationen nach den früheren Kriterien ausgegeben werden, bis ein zum Umschaltzeitpunkt erfasster Bereich des Förderbandes den Ausgabepunkt passiert hat. Die frühere Konfiguration bleibt dann aber vorübergehend für die bereits erfassten, jedoch noch nicht ausgegebenen Objektinformationen gültig. Es muss also quasi der Umschaltzeitpunkt vom Ort der Erfassung zu den Ausgabepunkten verfolgt beziehungsweise getrackt werden. Besonders anschaulich ist dies bei einer Verlagerung von Trennlinien: diese werden zunächst nur am Ort der Erfassung verschoben, und die neue Trennlinienkonfiguration verschiebt sich dann mit der Bewegung des Förderbandes bis zu den Ausgabepunkten.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Draufsicht auf ein Erfassungssystem an einem Förderband mit zu erfassenden Objekten;
- Fig. 2: ein vereinfachtes Blockschaltbild eines Erfassungssystems; und
- Fig. 3: eine Darstellung ähnlich Figur 1 mit einem Förderband, auf dem ein größeres Objekt mehr als eine Förderlinie beansprucht.

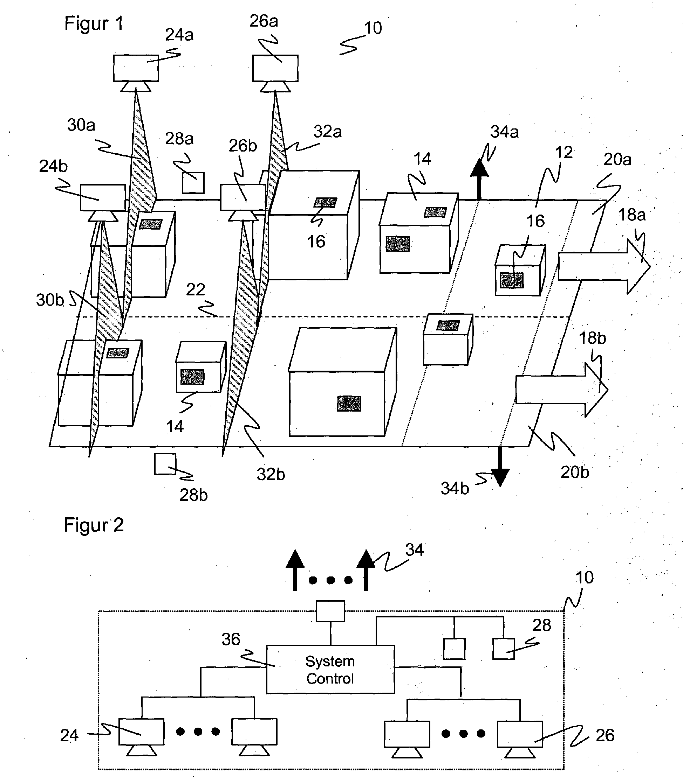

Figur 1 zeigte eine schematische dreidimensionale Draufsicht auf ein Erfassungssystem 10 an einem Förderband 12 mit zu erfassenden Objekten 14, auf denen Codes 16 angebracht sind. Das Förderband 12 ist in einer Längsrichtung entsprechend den die Förderrichtung andeutenden Pfeilen 18a-b zweigeteilt, so dass zwei Förderlinien 20a-b mit einer Trennlinie 22 dazwischen vorhanden sind. Das Förderband 12 kann ein Förderband im engeren Sinn, aber auch ein anderes System mit relativ zum Erfassungssystem 10 bewegten Objekten 14 sein. Das Erfassungssystem 10 umfasst je zwei Geometrieerfassungssensoren 24a-b, um die Objektgeometrie der Objekte 14 zu bestimmen, zwei Codeleser 26a-b zum Auslesen von Codeinformationen der Codes 16 und zwei Encoder 28a-b zur Bestimmung des Vorschubs der beiden Förderlinien 20a-b des Förderbandes 12.

Der Erfassungsbereich 30a-b eines einzelnen Geometrieerfassungssensors 24a-b ist vorzugsweise so groß wie die Breite einer Förderlinie 20a-b oder etwas größer, so dass die beiden Geometrieerfassungssensoren 24a-b Geometriedaten von Objekten 14 über die volle Breite des Förderbandes 12 bestimmen. Das muss aber nicht zwingend so sei, solange wesentliche Teile des Förderbandes 12, beispielsweise ein Großteil einer Nahtstelle erfasst wird. Entsprechend sind auch die Erfassungsbereiche 32a-b der Codeleser 26a-b ausgelegt. Dem Erfassungssystem 10 stehen also Geometriedaten und Codeinformationen aller Objekte 14 und Codes 16 unabhängig von der Position auf dem Förderband 12 zur Verfügung. Entsprechende Objektinformationen werden in einer weiter unten erläuterten Weise an Ausgabepunkten 34a-b in Förderrichtung unterhalb des Erfassungssystems 10 beispielsweise an eine übergeordnete Steuerung ausgegeben, um weitere Bearbeitungsschritte an den Objekten 14 einzuleiten, etwa eine Sortierung anhand der Objektinformationen. Wie einleitend beschrieben, können weitere, nicht dargestellte Sensoren aus anderer Perspektive angebracht werden, um Geometrien oder Codes von der Seite oder von unten zu erfassen.

Figur 2 zeigt das Erfassungssystem 10 noch einmal in einem vereinfachten Blockschaltbild. Dabei bezeichnen in der gesamten Beschreibung die gleichen Bezugszeichen die gleichen oder einander entsprechenden Merkmale. Die Geometrieerfassungssensoren 24, Codeleser 26 und Encoder 28 sind mit einer Steuer- und Auswertungseinheit 36 des Erfassungssystems 10 verbunden. Dort werden die verschiedenen erfassten Informationen gesammelt und verarbeitet und entsprechende Objektinformationen über einen Ausgang 38 an den Ausgabepunkten 34 an die übergeordnete Steuerung ausgegeben.

Die Steuer- und Auswertungseinheit 36 rechnet die Sensordaten in ein gemeinsames Koordinatensystem um. Es entsteht somit durch Addition der Erfassungsbereiche 30a-b der Geometrieerfassungssensoren 24a-b in der Breite und sukzessiv im Laufe der Förderbewegung in der Länge eine gemeinsame dreidimensionale Kontur der Objekte 14 auf dem Förderband 12, woraus einzelne Objekte identifiziert und deren geometrische Eigenschaften bestimmt werden, wie Position, Abmessungen, Volumen. Die dreidimensionale Kontur kann anschließend noch vereinfacht werden, etwa durch dreidimensionales Beaufschlagen mit einem Toleranzfeld beziehungsweise Umhüllen der Objekte 14 mit einfachen Körpern wie Quadern (Bounding Box). Geeignete Geometrieerfassungssensoren, beispielsweise entfernungsmessende Laserscanner, Lichtschnittsensoren oder 3D-Kameras, sind als solche bekannt und werden deshalb nicht näher erläutert. Sie können im Übrigen zumindest in manchen Ausführungsformen trotz ihrer Hauptaufgabe, geometrische Eigenschaften zu erfassen, zusätzlich oder sogar stattdessen Remissionseigenschaften bestimmen.

Durch eine entsprechende Addition der Erfassungsbereiche 32a-b der Codeleser 26a-b werden überall auf dem Förderband Codeinformationen der Codes 16 ausgelesen. Dabei wird zugleich auch eine Codeposition bestimmt. Das Vorgehen hängt hier vom Typ des Codelesers 26a-b ab. Bei einem Codescanner werden aus der Richtung des Lesestrahls mit Hilfe einer integrierten Abstandsbestimmung der Codeleser 26a-b oder durch Schneiden mit der dreidimensionalen Kontur der Geometrieerfassungssensoren 24a-b die Codepositionen ermittelt. Bei einem kamerabasierten Codeleser 26a-b wird das Bild ausgewertet, um den Code 16 zu lokalisieren, gegebenenfalls unter Verrechnung mit der dreidimensionalen Kontur. Ein RFID-Leser kann den in diesem Falle als Transponder ausgebildeten Code 16 aufgrund von Signalstärken oder Phasen lokalisieren.

Da der Steuer- und Auswertungseinheit 36 somit sowohl die Position der Objekte 14 als auch der Codes 16 bekannt ist, können die Codes 16 jeweils einem Objekt 14 zugeordnet werden, wodurch die ausgelesenen Codeinformationen zu Objektinformationen gemacht werden. Dabei ist zu beachten, dass die Erfassungen und die Ausgabe von Objektinformationen an unterschiedlichen Positionen an dem Förderband 12 erfolgt. Aus diesem Grund werden die Objekte 14 auf dem Förderband 12 verfolgt (getrackt), wobei die Encoder 28a-b die hierfür notwendigen Informationen über die Bewegung beziehungsweise den Vorschub des Förderbandes 12 liefern.

Die Steuer- und Auswertungseinheit 36 ist dabei in der Lage, die Objekte 14 auf den mehreren Förderlinien 20a-b entsprechend deren unterschiedlicher Fördergeschwindigkeit getrennt zu verfolgen. Die einzelnen Ereignisse wie Zeitpunkt der Geometrieerfassung oder Zeitpunkt der Codelesung werden dann separat mit dem für die jeweilige Förderlinie 20a-b passenden Encodersignal beaufschlagt, um die Sensordaten korrekt zu Objektinformationen zusammenzufassen und um zu wissen, wann das Objekt 14 auf seiner jeweiligen Förderlinie 20a-b einen Ausgabepunkt 34a-b passiert.

Aufgrund der erfassten Objekteigenschaften unterteilt die Steuer- und Auswertungseinheit 36 den Objektstrom in mehrere Teilströme, wobei jedem Teilstrom eine bestimmte Objektklasse zugeordnet ist. Ein denkbares Kriterium für die Definition einer Objektklasse ist die Zugehörigkeit zu einer Förderlinie 20a-b, also letztlich die laterale Position auf dem Förderband 12. Um darüber auch in Grenzfällen eindeutig zu entscheiden, kann beispielsweise die Lage des Schwerpunkts eines Objekts 14 oder der größte Flächenanteil auf einer Förderlinie 20a-b herangezogen werden. Auch manuelle Zuordnung oder Nachbearbeitung in kritischen Fällen ist denkbar.

Andere Kriterien für Definition einer Objektklasse können aus Geometrieeigenschaften, wie Länge, Breite, Höhe oder Volumen eines Objekts, aus Remissionseigenschaften, also Helligkeit oder Farbe, oder dem mit einem zusätzlichen Sensor erfassten Gewicht abgeleitet werden. Dann entstehen beispielsweise ein Teilstrom mit kleinen Objekten und ein anderer Teilstrom mit hellen Objekten. Auch die Codeinformationen können beitragen und eröffnen einen nahezu beliebigen Merkmalsraum. Ein typisches Beispiel ist aber die Sortierung nach Zieladressen, also beispielsweise nach Postleitzahlenbereichen. Es ist möglich, aber keineswegs zwingend, dass die Anzahl der Objektklassen der Anzahl der Förderlinien 20a-b entspricht.

Für jeden Teilstrom und damit jede den Teilstrom definierende Objektklasse kann nun ein eigener Ausgabepunkt 34a-b konfiguriert werden. Beispielweise werden dadurch höhere, größere oder schwerere Objekte 14 an einer anderen Position längs des Förderbandes 12 ausgeschleust als flache, kleine oder leichte Objekte 14. Insbesondere werden die Objekte auf unterschiedlichen Förderlinien 20a-b durch eigene Ausgabepunkte 34a-b unterschiedlich behandelt. Dabei wird nicht ausgeschlossen, dass mehrere Ausgabepunkte 34a-b auf dieselbe Position konfiguriert werden. Trotz dieser Übereinstimmung sind nämlich die unterschiedlichen Objektklassen im Moment der Übergabe der Objektinformationen an die übergeordnete Steuerung bekannt. Es besteht deshalb weiterhin die Möglichkeit, die Teilströme individuell zu behandeln, um etwa auf einer linken Förderlinie 20a geförderte Objekte 14 in eine andere Richtung auszuschleusen als auf einer rechten Förderlinie 20b geförderte Objekte 14.

Die Figuren 1 und 2 zeigen ein Beispiel mit einer in jeder Hinsicht zweigeteilten Konfiguration. Darauf ist die Erfindung aber nicht beschränkt. Zunächst können in analoger Weise Objekte 14 auf Förderbändern 12 mit zusätzlichen Förderlinien 20 mit mehreren Fördergeschwindigkeiten durch weitere Sensoren 24, 26, 28 verarbeitet werden. Umgekehrt ist aber auch möglich, dass das Förderband 12 ein einheitliches Förderband 12 größerer Breite ist. Dabei genügt natürlich ein Encoder 28 zur Erfassung der Förderbewegung. Die mehrere Förderlinien 20a-b sind dann quasi virtuell, und die Trennlinie 22 ist nicht mehr physisch vorgegeben, sondern frei konfigurierbar. Es ist in diesem Fall auch möglich, auf eine Trennlinie 22 ganz zu verzichten, somit die laterale Position eines Objekts 14 nicht zu einem Kriterium für die Zuordnung zu einer Objektklasse zu machen. In gewissem Sinne existieren dann immer noch mehrere Förderlinien 20a-b, die aber nicht räumlich getrennt, sondern praktisch in sich gefaltet sind und sich durch andere Objekteigenschaften definieren als die laterale Position.

Die Anzahlen von Geometriesensoren 24, Codelesern 26, Förderlinien 20 und Ausgabepunkten 34 müssen einander nicht entsprechen. Beispielsweise kann der Erfassungsbereich 30 eines einzigen Geometrieerfassungssensors 24 ausreichen, die gesamte Breite des Förderbandes 12 abzudecken, während sich dafür schmalere Erfassungsbereiche 32a-b mehrerer Codeleser 26 addieren müssen oder umgekehrt. Dabei ist nicht erforderlich, dass ein Erfassungsbereich 32a-b gerade einer Förderlinie 20a-b entspricht, obwohl dies die Konfiguration, Wartung und Übersicht erleichtert, da die erfassten Objektinformationen ohnehin in der Steuer- und Auswertungseinheit 36 fusioniert werden und deshalb unabhängig von der tatsächlichen Anzahl von Erfassungssensoren 24, 26 sind. Die Anzahl der Ausgabepunkte 34 richtet sich nicht deshalb zwingend nach der Anzahl von Förderlinien 20a-b, weil es virtuelle Förderlinien 20a-b geben kann und weil zusätzlich zu der lateralen Position von Objekten 14 auch andere Objekteigenschaften bei der Bildung von Objektklassen berücksichtigt werden können.

Die Codeleser 26 werden in diesem Zusammenhang als Erfassungssensoren für eine besondere Art von Objektinformationen aufgefasst, nämlich dem Codeinhalt. Je nachdem, für welche Objekteigenschaften man sich interessiert, kann deshalb in manchen Ausführungsformen auch auf die Codeleser 26 oder umgekehrt auf die Geometrieerfassungssensoren 28 verzichtet werden. In einer anderen Variante ist die Geometrieerfassung und die Codelesung in jeweils einem Sensor zusammengefasst, wie bei einem entfernungsmessenden Codescanner oder einem 3D-kamerabasierten Codeleser.

Wie schon erläutert, liegt die Trennlinie 22 nicht zwingend zwischen zwei physisch getrennten Förderlinien 20a-b unterschiedlicher Fördergeschwindigkeit. Dies eröffnet die Möglichkeit, virtuelle Trennlinien 22 hinzuzufügen, zu entfernen oder dynamisch zu verändern, um unterschiedliche Objektströme beispielsweise bei einem Chargenwechsel zu bearbeiten. Dabei kann die Umschaltung der Konfiguration dynamisch im laufenden Betrieb erfolgen. Eine solche Umschaltung kann die Lage von Trennlinien 22 ebenso betreffen wie andere Objekteigenschaften, welche die Definition für Objektklassen bilden. Bei einer Umschaltung im laufenden Betrieb wird der Umschaltzeitpunkt mit Hilfe der Encoderinformationen bis zu den Ausgabepunkten 34 verfolgt, damit im Moment der Umschaltung zwischen Erfassung und Ausgabe befindliche Objekte 14 richtig behandelt werden. Insbesondere gelten durch virtuelle Trennlinien 22 gebildete Förderlinien 20a-b noch so lange weiter, bis der Umschaltzeitpunkt den zugehörigen Ausgabepunkt 34a-b erreicht hat.

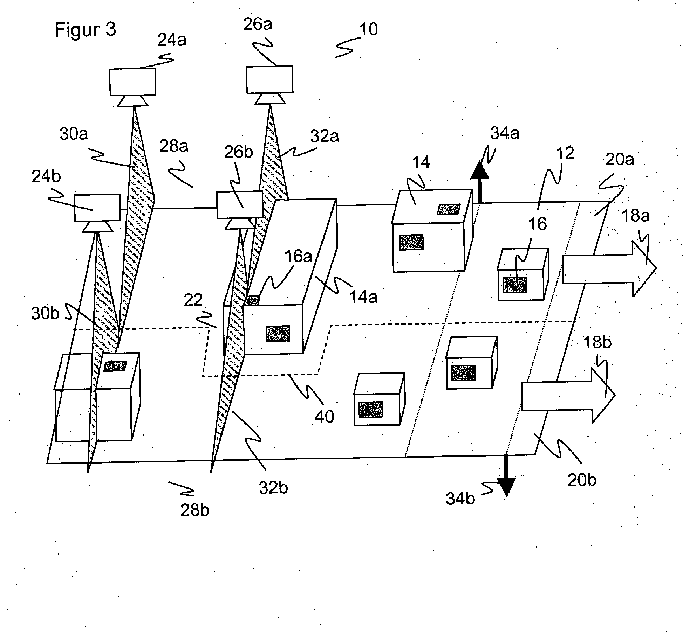

Figur 3 illustriert noch eine andere Form der dynamischen Anpassung von virtuellen Trennlinien 22. Im Unterschied zu Figur 1, bei dem sich die Objekte 14 stets eindeutig auf einer der beiden Förderlinien 20a-b befinden, wird hier ein großes Objekt 14a auf einer Förderlinie 20a gefördert, welches in den Bereich der anderen Förderlinie 20b überhängt, so dass dessen Code 16a auf der benachbarten Förderlinie 20b gelesen wird. Die Steuerungs- und Auswertungseinheit 36 gleicht dies aus, indem die Trennlinie 22 vorübergehend verschoben wird und eine Ausbuchtung 40 bildet, um das gesamte große Objekt 14a einer Förderlinie 20a zuzuordnen.

## Patentansprüche

1. Erfassungssystem (10) zur Montage an einem Förderband (12) mit mindestens einem Erfassungssensor (24, 26) zur Erfassung von Objekteigenschaften von auf dem Förderband (12) geförderten Objekten (14) und mit einer Auswertungseinheit (36) zur Ausgabe von aus den Objekteigenschaften abgeleiteten Objektinformationen an einem festlegbaren Ausgabepunkt (34) des Förderbandes (12),
**dadurch gekennzeichnet,**
**dass** die Auswertungseinheit (36) dafür ausgebildet ist, die Objekte (14) anhand der Objekteigenschaften in mindestens zwei Objektklassen zu unterteilen, und dass ein Ausgabepunkt (34) an dem Förderband (12) für jede Objektklasse festlegbar ist.

2. Erfassungssystem (10) nach Anspruch 1,
wobei mindestens ein Erfassungssensor (26) als Codeleser ausgebildet ist, insbesondere als kamerabasierter Codeleser, Barcodescanner oder RFID-Leser.

3. Erfassungssystem (10) nach Anspruch 2,
wobei die Position eines gelesenen Codes (16) in dem Codeleser (26) bestimmbar ist, und wobei die Auswertungseinheit (36) dafür ausgebildet ist, den Code (16) anhand seiner Position einem Objekt (14) zuzuordnen.

4. Erfassungssystem (10) nach einem der vorhergehenden Ansprüche,
wobei mindestens ein Erfassungssensor (24) als Geometrieerfassungssensor ausgebildet ist.

5. Erfassungssystem (10) nach einem der vorhergehenden Ansprüche,
das mindestens einen Geschwindigkeitssensor (28) zur Bestimmung der Fördergeschwindigkeit des Förderbandes (12) oder mindestens einen Wegsensor (28) zur Bestimmung des Vorschubs des Förderbandes (12) aufweist.

6. Erfassungssystem (10) nach einem der vorhergehenden Ansprüche,
wobei die Objekteigenschaften mindestens eine der folgenden Eigenschaften umfassen: eine Breite, eine Höhe, eine Länge, ein Volumen, einen Flächeninhalt einer Auflagefläche des Objekts (14) oder eines das Objekt (14) umhüllenden Körpers, eine Remissionseigenschaft oder ein Gewicht.

7. Erfassungssystem (10) nach einem der vorhergehenden Ansprüche,
das mehrere Erfassungssensoren (24a-b, 26a-b) aufweist, deren Erfassurigsbereiche (30a-b, 32a-b) sich in Breitenrichtung des Förderbandes (12) ergänzen, wobei die Auswertungseinheit (36) dafür ausgebildet ist, die Objekteigenschaften der Erfassungssensoren (24a-b, 26a-b) zu fusionieren.

8. Erfassungssystem (10) nach Anspruch 7,
wobei die Auswertungseinheit (36) dafür ausgebildet ist, von mehreren Erfassungssensoren (24a-b, 26a-b) erfasste Objekteigenschaften in ein gemeinsames Koordinatensystem umzurechnen.

9. Erfassungssystem (10) nach einem der vorhergehenden Ansprüche,
wobei die Auswertungseinheit (36) dafür ausgebildet ist, Objekte (14) anhand ihrer Position auf dem Förderband (12) in Querrichtung in mindestens zwei Objektklassen zu unterteilen, insbesondere anhand mindestens einer Trennlinie (22) längs des Förderbandes (12).

10. Erfassungssystem (10) nach Anspruch 9,
wobei die Auswertungseinheit (36) dafür ausgebildet ist, eine Trennlinie (22) dynamisch zu verschieben.

11. Erfassungssystem (10) nach Anspruch 9,
wobei die Trennlinie (22) eine tatsächliche Trennlinie zwischen mehreren Förderlinien (20a-b) des Förderbands (12) ist.

12. Erfassungssystem (10) nach einem der Ansprüche 9 bis 11,
wobei die Auswertungseinheit (36) dafür ausgebildet ist, die Anzahl der berücksichtigten Trennlinien (22) zu verändern.

13. Erfassungssystem (10) nach einem der Ansprüche 9 bis 12,
wobei die Auswertungseinheit (36) dafür ausgebildet ist, die Zuordnung anhand der Position in Querrichtung durch den Schwerpunkt des Objekts (14) oder den größten Anteil der Auflagefläche des Objekts (14) zu bestimmen.

14. Erfassungssystem (10) nach einem der vorhergehenden Ansprüche,
wobei die Auswertungseinheit (36) dafür ausgebildet ist, während des Betriebs zu einem Umschaltzeitpunkt die Kriterien für die Unterteilung von Objekten (14) in Objektklassen zu verändern, wobei an einem Ausgabepunkt (34) so lange Objektinformationen nach den früheren Kriterien ausgegeben werden, bis ein zum Umschaltzeitpunkt erfasster Bereich des Förderbandes (12) den Ausgabepunkt (34) passiert hat.

15. Verfahren zur Erfassung von Objekteigenschaften von auf einem Förderband (12) geförderten Objekten (14) mit mindestens einem Erfassungssensor (24, 26), bei dem aus den Objekteigenschaften abgeleiteten Objektinformationen an einem festlegbaren Ausgabepunkt (34) des Förderbandes (12) ausgegeben werden,
**dadurch gekennzeichnet,**
**dass** die Objekte (14) anhand der Objekteigenschaften in mindestens zwei Objektklassen unterteilt werden, und dass jeweils ein Ausgabepunkt (34) an dem Förderband (12) für jede Objektklasse festgelegt wird.

## Claims

1. A detection system (10) for installation at a conveyor belt (12) having at least one detection sensor (24, 26) for detecting object properties of objects (14) conveyed on the conveyor belt (12) and having an evaluation unit (36) for outputting object information derived from the object properties at a definable output point (34) of the conveyor belt (12),
**characterized in that** the evaluation unit (36) is configured to divide the objects (14) into at least two object classes based on the object properties, and **in that** an output point (34) can be defined for each object class at the conveyor belt (12).

2. The detection system (10) in accordance with claim 1,
wherein at least one detection sensor (26) is configured as a code reader, in particular as camera-based code reader, a barcode scanner or an RFID reader.

3. The detection system (10) in accordance with claim 2,
wherein the position of a read code (16) can be determined in the code reader (26), and wherein the evaluation unit (36) is configured to associate the code with an object (14) with reference to the position of said code.

4. The detection system (10) in accordance with any of the preceding claims,
wherein at least one detection sensor (24) is configured as a geometry detection sensor.

5. The detection system (10) in accordance with any of the preceding claims,
further comprising at least one speed sensor (28) for determining the conveying speed of the conveyor belt (12) or at least one path sensor (28) for determining the advance of the conveyor belt (12).

6. The detection system (10) in accordance with any of the preceding claims,
wherein the object properties comprise at least one of the following properties: a width, a height, a length, a volume, a surface area of a contact surface of the object (14) or of a body bounding the object, a remission property, or a weight.

7. The detection system (10) in accordance with any of the preceding claims,
comprising a plurality of detection sensors (24a-b, 26a-b) whose detection zones (30a-b, 32a-b) complement one another in the width direction of the conveyor belt (12), wherein the evaluation unit (36) is configured to fuse the object properties of the detection sensors (24a-b, 26a-b).

8. The detection system (10) in accordance with claim 7,
wherein the evaluation unit (36) is configured to convert object properties detected by a plurality of detection sensors (24a-b, 26a-b) into a common coordinate system.

9. The detection system (10) in accordance with any of the preceding claims,
wherein the evaluation unit (36) is configured to divide objects (14) into at least two object classes based on their position on the conveyor belt (12) in the transverse direction, in particular based on at least one dividing line (22) along the conveyor belt (12).

10. The detection system (10) in accordance with claim 9,
wherein the evaluation unit (36) is configured to displace a dividing line (22) dynamically.

11. The detection system (10) in accordance with claim 9,
wherein the dividing line (22) is an actual dividing line between a plurality of conveyor lines (20a-b) of the conveyor belt (12).

12. The detection system (10) in accordance with any of claims 9 to 11,
wherein the evaluation unit (36) is configured to vary the number of dividing lines (22) taken into account.

13. The detection system (10) in accordance with any of claims 9 to 12,
wherein the evaluation unit (36) is configured to determine the association based on the position in the transverse direction by the center of gravity of the object (14) or the largest portion of the contact surface of the object (14).

14. The detection system (10) in accordance with any of the preceding claims,
wherein the evaluation unit (36) is configured to vary the criteria for the division of objects (14) into object classes during the operation at a switchover time, with object information being output according to the earlier criteria for so long at an output point (34) until a zone of the conveyor belt (12) detected at the switchover time has passed the output point (34).

15. A method of detecting object properties of objects (14) conveyed on a conveyor belt (12) having at least one detection sensor (24, 26), wherein object information derived from the object properties is output at a predefinable output point (34) of the conveyor belt (12), **characterized in that** the objects (14) are divided into at least two object classes based on the object properties, and **in that** a respective output point (34) is defined for each object class at the conveyor belt (12).

## Revendications

1. Système de détection (10) pour le montage sur une bande de convoyage (12), comprenant au moins un capteur de détection (24, 26) pour détecter des propriétés d'objets (14) convoyés sur la bande de convoyage (12), et comprenant une unité d'évaluation (36) pour délivrer des informations sur les objets, dérivées des propriétés des objets, à un point de distribution fixé (34) de la bande de convoyage (12),
**caractérisé en ce que**
l'unité d'évaluation (36) est réalisée pour subdiviser les objets (14) au moyen des propriétés dans au moins deux classes d'objets, et **en ce qu'**un point de distribution (34) peut être fixé pour chaque classe d'objets sur la bande de convoyage (12).

2. Système de détection (10) selon la revendication 1,
dans lequel au moins un capteur de détection (26) est réalisé sous forme de lecteur de code, en particulier de lecteur de code basé sur une caméra, de scanner de codes à barres ou de lecteur RFID.

3. Système de détection (10) selon la revendication 2,
dans lequel la position d'un code lu (16) dans le lecteur de code (26) peut être déterminée, et dans lequel l'unité d'évaluation (36) est réalisée pour associer le code (16) à un objet (14) au moyen de sa position.

4. Système de détection (10) selon l'une des revendications précédentes,
dans lequel au moins un capteur de détection (24) est réalisé sous forme de capteur de détection géométrique.

5. Système de détection (10) selon l'une des revendications précédentes,
qui comprend au moins un capteur de vitesse (28) pour déterminer la vitesse de convoyage de la bande de convoyage (12) ou au moins un capteur de course (28) pour déterminer l'avance de la bande de convoyage (12).

6. Système de détection (10) selon l'une des revendications précédentes,
dans lequel les propriétés de l'objet incluent au moins l'une des propriétés suivantes : largeur, hauteur, longueur, volume, superficie d'une surface d'appui de l'objet (14) ou d'un corps qui enveloppe l'objet (14), propriété de réémission, ou poids.

7. Système de détection (10) selon l'une des revendications précédentes, qui inclut plusieurs capteurs de détection (24a-b, 26a-b), dont les zones de détection (30a-b, 32a-b) se complètent dans la direction en largeur de la bande de convoyage (12), et l'unité d'évaluation (36) est réalisée pour fusionner les propriétés concernant l'objet et venant des capteurs de détection (24a-b, 26a-b).

8. Système de détection (10) selon la revendication 7,
dans lequel l'unité d'évaluation (36) est réalisée pour convertir des propriétés concernant des objets et détectées par plusieurs capteurs de détection (24a-b, 26a-b), dans un système de coordonnées commun.

9. Système de détection (10) selon l'une des revendications précédentes,
dans lequel l'unité d'évaluation (36) est réalisée pour subdiviser des objets (14) dans au moins deux classes d'objets au moyen de leur position sur la bande de convoyage (12) en direction transversale, en particulier au moyen d'au moins une ligne de séparation (22) le long de la bande de convoyage (12).

10. Système de détection (10) selon la revendication 9,
dans lequel l'unité d'évaluation (36) est réalisée pour déplacer une ligne de séparation (22) de manière dynamique.

11. Système de détection (10) selon la revendication 9,
dans lequel la ligne de séparation (22) est une ligne de séparation réelle entre plusieurs lignes de convoyage (20a-b) de la bande de convoyage (12).

12. Système de détection (10) selon l'une des revendications 9 à 11,
dans lequel l'unité d'évaluation (36) est réalisée pour modifier le nombre des lignes de séparation (22) prises en compte.

13. Système de détection (10) selon l'une des revendications 9 à 12,
dans lequel l'unité d'évaluation (36) est réalisée pour déterminer l'association au moyen de la position en direction transversale grâce au centre de gravité de l'objet (14) ou de la majeure partie de la surface d'appui de l'objet (14).

14. Système de détection (10) selon l'une des revendications précédentes,
dans lequel l'unité d'évaluation (36) est réalisée pour, pendant le fonctionnement et à un instant de commutation, modifier les critères pour la subdivision des objets (14) en classes d'objets, et dans lequel on délivre à un point de distribution (34) des informations d'objets selon les critères antérieurs aussi longtemps qu'une zone de la bande de convoyage (12) qui a été détectée jusqu'à l'instant de commutation a dépassé le point de distribution (34).

15. Procédé pour détecter des propriétés d'objets concernant des objets (14) convoyés sur une bande de convoyage (12) avec au moins un capteur de détection (24, 26), dans lequel des informations sur les objets, dérivées des propriétés concernant les objets, sont délivrées à un point de distribution fixé (34) de la bande de convoyage (12),
**caractérisé en ce que** les objets (14) sont subdivisés au moyen des propriétés en au moins deux classes d'objets, et **en ce que** l'on fixe respectivement un point de distribution (34) sur la bande de convoyage (12) pour chaque classe d'objets.
